# FASCICULE DE BREVET EUROPEEN

(11) **EP 0 652 721 B1**
(45) Date de publication et mention de la délivrance du brevet: **19.11.1997**
(21) Numéro de dépôt: 94915499.1
(22) Date de dépôt: 27.05.1994
(51) Int. Cl.: A47J 31/40

(54) **PROCEDE D'EXTRACTION DE SACHETS SOUPLES FERMES ET SON DISPOSITIF**
VERFAHREN UND VORRICHTUNG ZUR EXTRAKTION UNDURCHLÄSSIGER, VERFORMBARER PORTIONSPACKUNGEN
EXTRACTION PROCESS FROM CLOSED FLEXIBLE BAGS AND DEVICE FOR SAME

(30) Priorité: 02.06.1993 CH 1624/93; 02.06.1993 CH 1625/93
(43) Date de publication de la demande: 17.05.1995
(73) Titulaire: SOCIETE DES PRODUITS NESTLE S.A., 1800 Vevey (CH)
(72) Inventeur: FOND, Olivier, CH-1400 Yverdon (CH); MASEK, Petr, CH-1614 Granges (CH)
(74) Mandataire: Thomas, Alain
(86) Numéro de dépôt international: CH9400099
(87) Numéro de publication internationale: WO9427482

(56) Documents cités:
- EP-A- 0 512 142
- WO-A-92/07775
- FR-A- 2 526 652
- US-A- 3 347 151
- US-A- 3 387 553
- US-A- 3 403 617

## Description

L'invention concerne un procédé d'extraction de sachets souples fermés, contenant au moins une substance pour la préparation d'une boisson, ledit sachet disposant d'au moins une soudure linéaire. L'invention concerne en outre le dispositif pour la mise en oeuvre du procédé.

L'utilisation de portions prédosées et préemballées de café moulu pour la préparation de café de type filtre (percolation sous pression atmosphérique et sous le seul effet de la colonne d'eau chaude placée au dessus du lit de café) ou type espresso (pression d'extraction à partir de 0.5 bar et jusqu'à 20 bar) présente l'avantage de faciliter les opérations de préparation du café tout en garantissant une relative constance de qualité du produit.

Ces portions se présentent actuellement sous deux formes principales. Selon une première version, la portion décrite dans la demande de brevet GB 2121762 est constituée d'un emballage avec une buse destinée à être perforée pour permettre l'injection de liquide dans la cartouche. L'évacuation du liquide après extraction à travers le lit de café se fait au travers de la déchirure, effectuée automatiquement sous l'effet de la pression ou par découpe mécanique, dans le fond de la cartouche. Cette cartouche, exigeant la présence d'une buse, est complexe et onéreuse à produire et à utiliser. Le dispositif d'extraction est aussi très complexe et il exige que le dispositif d'introduction du fluide aqueux soit en coopération étanche avec la cartouche.

Selon une seconde version, décrite dans la demande de brevet WO-A-92/07775, la portion est constituée d'une capsule étanche s'ouvrant dans son dispositif d'extraction sous l'effet de l'introduction du fluide d'extraction après déformation contre des pointes. Cette capsule, constituée d'une enveloppe étanche formant une paroi latérale ainsi que deux parois dont l'une constitue le fond de la cartouche et l'autre ferme l'extrémité opposée de la cartouche, présente l'inconvénient d'employer différents matériaux d'emballage, certains suffisamment épais pour leur conférer une semi-rigidité et ne peut être utilisée que dans un seul sens avec un dispositif d'extraction parfaitement adapté à la capsule et à sa disposition. Ce dispositif comprend vers la face supérieure de la cartouche un dispositif d'introduction d'eau, vers la face inférieure un dispositif de perforation du fond de la cartouche, la cartouche devant être serrée sur tout son rebord de manière parfaitement étanche entre les deux parties amovibles du dispositif d'extraction. Ce problème d'étanchéité se pose également pour le dispositif selon le brevet européen No. 0512142.

WO-A-94/02059 décrit un procédé d'extraction de sachets souples fermés contenant au moins une substance pour la préparation d'une boisson. Le sachet dispose d'au moins une soudure linaire. WO-A-94/02059 décrit aussi un dispositif pour la mise en oeuvre du procédé.

L'objet de la présente invention est de proposer un procédé et un dispositif permettant l'extraction d'un sachet souple fermé, directement prêt à l'emploi et sans buse d'introduction du fluide, et n'exigeant pas une étanchéité parfaite, ni entre le dispositif d'introduction du fluide et le sachet, ni entre les deux parties coopérant du dispositif d'extraction.

L'invention concerne un procédé d'extraction de sachets souples fermés, contenant au moins une substance pour la préparation d'une boisson, ledit sachet de forme tétraédrique disposant d'une soudure longitudinale et de deux soudures transversales dans lequel on met en place le sachet dans un porte-sachet comportant une poignée de préhension et un logement pour ledit sachet, on serre ce sachet au niveau de sa zone de soudure, on met en place l'ensemble sachet porte-sachet dans une machine d'extraction, on perfore ledit sachet à sa partie inférieure au-dessus de la zone de soudure transversale avec une aiguille, on injecte dans la partie supérieure du sachet à l'aide de ladite aiguille un mélange d'air et d'eau à une pression comprise entre 0,5 et 10 bar, on déchire sous l'effet de la pression au moins l'une des deux faces inférieures du sachet contre des zones en relief et en creux d'un dispositif d'extraction, puis on recueille l'extrait qui a traversé tout le lit de la substance par les ouvertures réalisées à la partie inférieure du sachet.

La notion de partie supérieure et inférieure du sachet n'est définie qu'une fois le sachet mis en place dans le dispositif d'extraction. Le sachet est normalement disposé en position verticale. Néanmoins, en variante, le sachet peut être disposé en position oblique ou horizontale. Dans ce dernier cas, la partie dite inférieure du sachet est considérée comme la zone où le sachet est serré par la pince du porte-sachet et l'aiguille d'injection pénètre tandis que la partie dite supérieure correspond à la zone opposée. Le sachet peut être correctement extrait dans la position horizontale, pourvu que le fluide d'extraction pénètre à une extrémité du lit de la substance à extraire et ressorte à son opposé et que la perte de charge d'extraction soit nettement supérieure à l'épaisseur du lit de café (5 à 100 m de perte de charge d'extraction contre 0,5 à 10 cm d'épaisseur du lit , facteur 1000 ).

Le procédé sera mieux compris par la description de ses phases successives, pouvant être réalisées, dans le cas particulier de son utilisation pour du café, à partir de machines à café du commerce comportant les moyens, dés la construction ou par adjonction d'adaptateurs, pour tenir le sachet, injecter l'eau à l'intérieur du sachet et recueillir l'extrait de café :
- Dans un premier temps, le sachet est mis en place dans le porte-sachet. Selon une première disposition complémentaire, le porte-sachet comporte une pince, manipulable par des moyens connus qui se referment sur la soudure inférieure du sachet. Le sachet est donc fermement maintenu en position dans le porte.sachet . Selon une seconde disposition, en particulier si le sachet a été scellé sous vide, la forme du sachet est parfaitement définie. Il n'est donc pas nécessaire de le fixer au porte-sachet mais plutôt de l'introduire dans une cavité du porte-sachet correspondant à la forme et aux dimensions du dit sachet.
- Dans un deuxième temps, le porte.sachet et le sachet sont mis en place dans la machine d'extraction. Simultanément au cours de cette opération, le sachet est perforé par l'aiguille d'injection d'eau, à sa base juste au dessus de sa soudure inférieure.
   L'aiguille pénètre de tout son long dans le sachet jusqu'à sa partie supérieure au dessus du lit de la substance à extraire.

Selon une variante de ce procédé, la perforation par l'aiguille d'injection d'eau peut être réalisée après le positionnement définitif du porte.sachet dans la machine.

Selon une autre variante, particulièrement dans le cas de grands sachets, plusieurs aiguilles d'injection d'eau, disposées en parallèle, peuvent être employées.
- Dans un troisième temps, l'eau mélangée ou non à de l'air est injectée sous une pression de 0.5 à 10 bar dans le sachet à travers l'aiguille d'injection d'eau. Ce fluide d'extraction est ainsi dirigé vers le haut du sachet et retombe en pluie au dessus du lit de la substance à extraire. La pression monte dans le sachet et ses faces se plaquent par déformation contre les parois d'un dispositif d'extraction et particulièrement contre les éléments spécifiques en relief et en creux du dit dispositif destinés à permettre des déchirures de la matière du dit sachet. Cette phase assure de plus un temps de pré mouillage du café avant extraction.

L'air est celui présent dans les conduites de ladite machine qui se mélange à l'eau lors de la mise en route du processus d'extraction.

Dans certaines conditions, selon les machines employées et la température initiale du chauffage, les premières fractions d'eau peuvent se présenter sous forme de vapeur.

Selon une variante du procédé, un temps de pause, avec arrêt de l'injection du fluide d'extraction entre le troisième et le quatrième temps, peut être observé.
- Dans un quatrième temps, selon une première variante, les déchirures, ayant été initiées lors de la mise en place du sachet dans le porte.sachet et fermeture de la pince ou lors de la mise en place de l'ensemble sachet porte.sachet dans le dispositif d'extraction, peuvent être agrandies sous l'effet de la poussée de la matière contre les éléments saillants lors de la mise en pression du sachet.

Selon une seconde variante, les déchirures ne se réalisent que lors de la montée en pression à l'intérieur du sachet. La matière constituant les faces du sachet atteignant la tension de rupture, la déchirure s'amorce à l'emplacement des parties saillantes du relief et /ou dans les parties creuses, soit les cavités (creux) formées entre lesdites parties en relief. Selon la forme du relief, la déchirure peut aussi se prolonger dans les deux zones mentionnées précédemment.

Les parties ainsi fracturées des faces d'extraction viennent s'appliquer contre le relief avec pour effet d'agrandir les ouvertures réalisées, favorisant l'écoulement ultérieur du fluide d'extraction, mais de telle manière qu'aucune dispersion de matière ne se fasse en dehors du sachet. La pression interne du sachet chute partiellement, mais cette décompression momentanée est limitée car le flux de fluide qui s'échappe du sachet est laminé tant par les faibles interstices constitués par les lèvres de la matière déchirée de la face d'extraction s'appuyant sur le relief que par les orifices d'écoulement pratiqués dans l'élément en relief. L'écoulement est ainsi parfaitement contrôlé, excluant notamment tout déplacement intempestif de la phase solide du contenu du sachet qui pourrait obstruer les orifices d'écoulement et gêner ultérieurement la régularité et la reproductibilité du processus d'extraction.
Selon la terminologie employée dans le brevet CH 668545 concernant une capsule avec opercule pré.affaibli, cette phase d'ouverture du sachet peut être considérée comme une phase d'aération de la matière pulvérulente.

Selon une variante du procédé, un temps de pause, avec arrêt de l'injection du fluide d'extraction entre le quatrième et le cinquième temps, peut être observé.
- Dans un cinquième temps, le café est extrait sous une pression de 0.5 à 10 bar, cette pression étant volontairement et essentiellement liée à la perte de charge à travers le lit de café mouillé et par là même compacté. Il s'agit de la phase d'extraction. L'extrait de café parvient à passer entre les parties déchirées et déformées de la face d'extraction du sachet jusqu'à des orifices d'écoulement, car ces parties déchirées ne peuvent se plaquer de manière parfaitement étanche contre le relief du fait d'une certaine rigidité relative due à leurs dimensions assez réduites.

Le nombre des déchirures, réalisées dans les faces d'extraction, se situe préférentiellement entre 5 et 200. Ces déchirures peuvent être réalisées sur l'une et/ou l'autre des deux faces inférieures du sachet selon que les éléments en relief et en creux sont disposés sur la partie fixe et/ou la partie amovible (pince) du porte.sachet.

L'extrait peut aussi s'échapper par les déchirures opérées autour de la zone de pénétration de l'aiguille d'injection d'eau dans le sachet.

Des ouvertures complémentaires dans les faces d'extraction peuvent éventuellement se produire lorsque la pression d'extraction atteint des valeurs élevées.
- Dans un sixième temps, le porte-sachet est libéré et le sachet est évacué, par exemple, par simple retournement du porte-sachet et ouverture de la pince.

La description donnée ci-après à titre d'exemple d'application au café torréfié et moulu n'est pas limitative, le procédé étant applicable à tout produit ou mélange de produits enfermé dans un sachet souple tel du thé, du café soluble, un mélange de café moulu et de café soluble, un produit chocolaté ou un aliment déshydraté et destinés à l'obtention de boissons ou d'aliments sous forme d'infusions.

Le sachet utilisé pour la mise en oeuvre du procédé selon l'invention peut être un sachet souple fermé constitué d'un seul matériau d'emballage et directement réalisé à partir d'une seule feuille de ce matériau conformée pour assurer un volume permettant de contenir ladite substance et excédentaire par rapport au volume occupé par ladite substance, ledit sachet étant destiné à être utilisé tel quel dans le dispositif d'extraction prévu et comportant au moins une soudure linéaire.

Par fermé, on entend que le sachet est étanche ou pratiquement étanche à l'oxygène et à la vapeur d'eau. Par utilisable tel quel, on entend qu'un tel sachet est directement prêt à l'emploi et ne nécessite aucune préparation préalable avant de le mettre dans le système d'extraction selon l'invention. En particulier, il n'est pas nécessaire de réaliser une opération volontaire d'ouverture ou de déchirure du sachet avant sa mise en place dans le dispositif d'extraction.
Son intérêt est qu'il assure de multiples fonctions au cours des différentes étapes de son utilisation : il assure d'abord une fonction d'emballage et de protection contre l'oxygène ou l'eau d'une dose de substance pendant la période de stockage, puis il assure la fonction de réacteur d'extraction et de filtre puisque la substance qu'il contient est directement extraite par le fluide d'extraction à l'intérieur même du sachet sans sortie des fractions non extractibles, enfin, après extraction, il assure la fonction d'emballage pour les restes de la substance évitant ainsi toute souillure par dispersion de cette dernière.

Un tel sachet est fabriqué à partir d'une technologie connue et maîtrisée. Son originalité réside dans son contenu, la nature de ses matériaux et de son degré de remplissage si bien, qu'en étant associé avec un dispositif d'extraction spécifique, cet emballage présente de multiples fonctions qui vont bien au delà de la seule fonction d'emballage.

Le sachet est directement fabriqué à partir d'une seule feuille du matériau d'emballage qui est pliée, soudée et découpée en des endroits variables, après y avoir doser la substance pulvérulente considérée..

Le sachet présente une soudure longitudinale et deux soudures transversales. Le mode de fabrication d'un tel sachet est le suivant : La feuille est enroulée autour d'un tube doseur par lequel la substance est acheminée. La soudure longitudinale du sachet est réalisée autour de ce tube. La soudure inférieure est effectuée, la substance est introduite dans le sachet puis la soudure supérieure est réalisée.

Dans la présente description, on entend par soudure longitudinale et transversale, deux soudures qui sont perpendiculaires entre elles, comme il apparaîtra en relation avec les Figures.

Dans une première disposition, les deux soudures transversales sont disposées dans deux plans perpendiculaires. Dans ce cas, le sachet proposé se présente sous la forme d'un tétraèdre.

Dans une seconde disposition, les deux soudures transversales sont réalisées dans un même plan. Le sachet présente alors une forme proche du parallélépipède, avec éventuellement diverses versions, par exemple, pliage de l'une ou l'autre des soudures transversales qui sont rabattues sur les faces supérieures et/ou inférieures après soudage, pliage de la feuille par enfoncement des coins avant soudage.

Le sachet est rempli d'au moins une substance pulvérulente pour la préparation d'une boisson. Cette substance est de préférence du café torréfié et moulu, mais peut aussi être du thé, du café soluble, un mélange de café moulu et de café soluble, un produit chocolaté ou toute autre substance comestible déshydratée. Plusieurs substances peuvent être placées dans ledit sachet, mélangées ou si nécessaire séparées par une paroi poreuse.

Selon une disposition particulière, le sachet peut présenter une pression interne supérieure à la pression atmosphérique et se situant entre 1000 et 1800 mbars. Cette surpression a pour effet d'augmenter le volume apparent du sachet, permet d'assurer le maintien de la forme souhaitée du sachet, facilite la préhension du sachet ainsi que son introduction et son utilisation dans le dispositif d'extraction.

Cette surpression peut être réalisée directement lors de la fabrication du sachet ou atteinte ultérieurement, par exemple avec une substance libérant elle-même du gaz tel que le café fraîchement torréfié et moulu qui dégage lentement du CO2.

Selon une autre disposition particulière, si la conservation du produit est critique bien que le procédé de remplissage est alors complexe et onéreux, le sachet peut être scellé après avoir été mis sous vide. Un tel sachet présente une certaine rigidité qui contribue alors au maintien de sa forme initiale et à sa facilité de manutention, ainsi qu'un encombrement minimum .

Selon une disposition particulière du sachet, la substance à extraire peut être compactée, se présentant sous forme d'un ou plusieurs morceaux.

Selon la configuration préférée, le sachet est constitué de matériaux pratiquement ou totalement étanches au gaz, tel que l'oxygène et à l'eau. Le sachet, dit alors fermé, est directement prêt à l'emploi et ne nécessite aucune préparation préalable avant de le mettre dans le système d'extraction prévu à son effet.

Dans cette configuration préférée, la feuille peut être constituée de matériau souple tel que de l'aluminium d'une épaisseur de 20 à 50 µm ou du plastique tel que le PET, dans les deux cas avec une couche soudable.

Préférentiellement, la feuille sera constituée d'un matériau multicouches souple. La combinaison suivante des matériaux est recommandée :
couche extérieure: PET ( normal, tissé ou non tissé), PE, PP, PA, PS ou papier
couche barrière à l'oxygène et/ou à la vapeur d'eau: aluminium d'une épaisseur de 5 à 30 µm, EVOH, PVDC, PVA , couche d'oxyde de Silicium, ou métallisation .
couche intérieure : plastique thermosoudable, de préférence PE ou PP ou PS.

On peut envisager, par exemple, les combinaisons multicouches suivantes : PET-EVOH-PE, Papier-Aluminium-PE, ou PET-Oxyde de Silicium-PET-PP, ou PET-métallisation-PP.

Selon une seconde configuration, le sachet peut être réalisé avec du papier filtre ou des fibres plastiques tissées ou non tissées. Le sachet, dit alors ouvert, doit être suremballé dans une enveloppe supplémentaire étanche à l'oxygène. Avant utilisation du sachet, celui-ci doit être dégagé de son emballage de protection puis employé tel quel dans le dispositif d'extraction spécialement prévu à son effet.

Les faces du sachet présentent des longueurs se situant entre 3 et 25 cm, de préférence entre 4 et 15 cm, l'épaisseur du sachet se situant quant à elle entre 0.5 et 10 cm selon le type de sachet réalisé et sa pression interne, de préférence entre 1 et 5 cm.

Le taux de remplissage effectif du volume du sachet par la substance se situe normalement entre 10 et 70 %. Ce taux de remplissage effectif peut être nettement inférieur au taux de remplissage apparent car la substance contenue est elle-même très poreuse et présente beaucoup de volume libre entre ses particules.

Un faible taux de remplissage effectif du sachet est aussi observé si le sachet présente une pression interne élevée. Dans le cas où le sachet a été scellé sous vide, le taux de remplissage est beaucoup plus élevé.

La dose de substance à extraire contenue dans le sachet se situe entre 5 à 300 g , de préférence 6 à 30 g.

Lorsque la substance pulvérulente est sujette à oxydation, les opérations de fabrication peuvent être réalisées sous protection d'un courant de gaz inerte exempt d'oxygène, par exemple sous azote.

L'invention concerne en outre le dispositif pour la mise en oeuvre de ce procédé. Ce dispositif est constitué d'un porte-sachet destiné à être fixé sur une machine d'extraction, ledit porte-sachet comprend une poignée, un logement ouvert pour le sachet de forme tétraédrique et une zone d'écoulement pour le café, ledit logement comprenant au-dessus de la zone d'écoulement des moyens pour maintenir le sachet par sa partie inférieure et des éléments en relief et un creux sur une grille d'écoulement pour favoriser la déchirure d'au moins une des deux faces du dit sachet et la machine d'extraction comprend au moins une aiguille d'injection du fluide d'extraction prévue pour pénétrer dans le sachet au niveau de la grille d'écoulement du porte-sachet et une partie complémentaire permettant lors de la mise en place du porte-sachet de fermer le logement du sachet.

Le porte-sachet est mis en place et maintenu dans la machine par des moyens mécaniques connus tels que par exemple des pattes coopérant avec des gorges.

Les moyens pour tenir le sachet dans le porte-sachet peuvent être représentés par une pince, manipulable par l'intermédiaire d'un levier avec un doigt (ou gachette) et pourvue d'un ressort, qui enserre la partie inférieure du sachet, par exemple la zone de la soudure inférieure du dit sachet. La force de serrage du sachet doit être telle que le sachet ne se déplace pas lorsqu'il est perforé par l'aiguille d'injection d'eau et ensuite lorsque l'eau est injectée sous pression dans le sachet.

Les éléments en relief et en creux sur une grille d'écoulement destinés à assurer la déchirure du matériau du dit sachet dans sa partie inférieure afin de permettre l'évacuation de l'extrait peuvent être de même nature que ceux décrits dans la demande de brevet WO 94/02059. Ces éléments peuvent aussi être de même nature que ceux décrits dans le brevet US 3403617.

Les éléments en relief et en creux sur une grille d'écoulement peuvent être disposés sur l'une et/ou l'autre des faces de la pince de serrage du sachet sur le porte.sachet.

L'aiguille d'injection du fluide d'extraction est une pointe creuse, éventuellement biseautée à son extrémité, d'un diamètre extérieur de 1.5 à 5 mm, le diamètre pouvant varier sur la longueur de l'aiguille . Sa longueur est adaptée aux dimensions du sachet afin qu'elle pénètre à la base de celui-ci et qu'elle débouche dans sa partie supérieure, au dessus du lit de la substance à extraire. Selon une variante d'exécution de cette aiguille creuse, elle peut présenter dans sa partie terminale différents orifices, assurant la sortie de l'eau selon des angles variables.

Selon une variante particulière, dans le cas par exemple de grands sachets, plusieurs aiguilles d'injection d'eau, disposées en parallèle, peuvent être employées.

Selon une première variante d'exécution du dispositif, l'aiguille d'injection peut être solidaire du porte.sachet. Dans ce cas, elle est amovible. Elle n'est alors mise en position à travers le sachet qu'une fois le sachet mis en place dans le porte.sachet.

Selon une seconde variante d'éxécution du dispositif, l'aiguille d'injection est solidaire de la machine d'extraction. Elle peut être fixe ou amovible. Dans ce dernier cas, elle doit être mise en position d'extraction, c'est à dire introduite en partie à l'intérieur du sachet, au cours d'une opération postérieure à la mise en place du porte-sachet dans la machine.

Selon une variante particulière du dispositif d'extraction, le porte-sachet et la partie complémentaire de la machine possèdent sur leurs bordures des joints destinés à réaliser une cavité étanche.

L'extrait qui se dégage du sachet au cours de l'extraction est dirigé vers un récipient à l'aide de goulottes et canaux d'écoulement prévus au niveau du porte.sachet et/ou de la machine de base d'extraction.

Afin de protéger l'aiguille d'injection qui est assez fine et délicate et par là-même protéger l'utilisateur de la machine contre toute blessure vis à vis de cette aiguille, on peut prévoir dans la machine, au niveau de l'emplacement normal du porte-sachet, des pièces de protection liées à un ressort qui se rabattent sur les cotés lorsque le porte-sachet est introduit dans son logement. Lorsque le porte.sachet est en dehors de la machine, ces pièces protègent le logement du porte-sachet et en particulier l'aiguille d'injection.

La suite de la description est faite en référence aux dessins sur lesquels :
Fig. 1 est une représentation d'un sachet avec une soudure longitudinale et deux soudures transversales, les deux soudures transversales étant disposées dans un plan perpendiculaire,
Fig. 2 est une représentation schématique de la machine d'extraction vue de coté,
Fig.3 est une représentation de la machine d'extraction vue de dessus,
Fig. 4 est une coupe partielle de la figure 2 selon l'axe A-A et représentant le dispositif d'extraction d'un sachet. Le sachet représenté à titre d'exemple a la forme d'un tétraèdre avec des soudures supérieures et inférieures disposées dans un plan perpendiculaire.

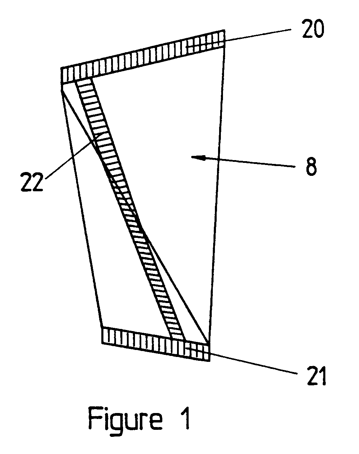

Le sachet (8) , représenté Fig.1, disposant de deux soudures transversales (20, 21) disposées dans deux plans perpendiculaires et d'une soudure longitudinale (22), a une forme tétraédrique.

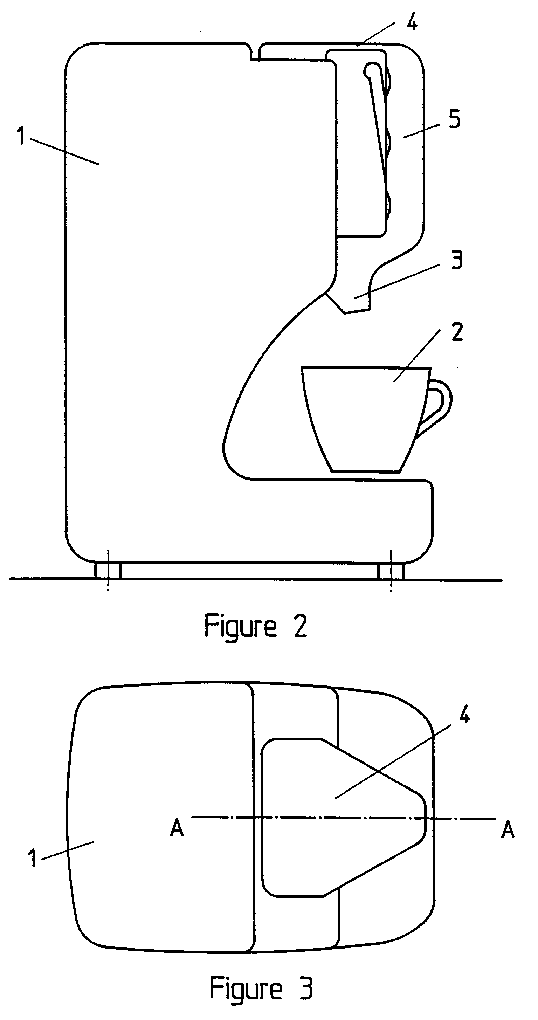

La machine 1, représentée Fig.2 et 3 possède les moyens (non représentés) nécessaires pour chauffer et injecter sous pression le fluide d'extraction.
L'extrait est récolté dans un récipient 2, placé à l'aplomb du bec d'écoulement 3 du porte-sachet 4.
Le porte-sachet 4 manipulable à l'aide d'une poignée 5 est mis en place dans la machine d'extraction par l'intermédiaire de deux pattes symétriques coopérant avec deux gorges.

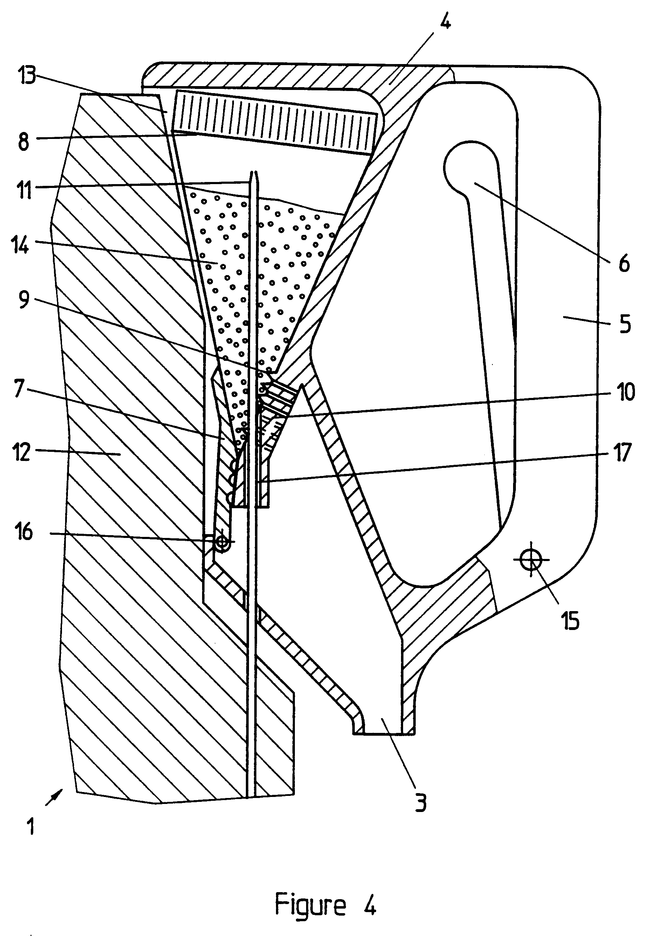

En référence a la figure 4, la poignée 5 du porte.sachet présente une gâchette 6 pivotant selon l'axe 15 qui permet de manipuler la pince 7 qui serre la bordure inférieure du sachet 8. La pince 7 s'ouvre en pivotant selon l'axe 16 pour permettre la mise en place ou l'évacuation du sachet. Le sachet est rempli d'une substance à extraire 14.
Des éléments en relief et en creux 9 placés sur une grille d'écoulement 10, solidaires du porte-sachet 4 communique avec le canal d'écoulement 3.
L'aiguille d'injection 11, solidaire de la machine 1, pénètre à la base du sachet 8 à travers un alésage 17 prévu sur le bas du porte-sachet et débouche dans la partie supérieure du dit sachet.

Une partie complémentaire 12, solidaire de la machine 1, crée avec le porte-sachet 4 un logement fermé 13 épousant sensiblement la forme extérieure du sachet.

### Explication des abréviations :

- PVDC :: Polychlorure de vinylidène
- EVOH :: Copolymère d'éthylène et d'alcool de vinyle
- PP :: Polypropylène
- PE :: Polyéthylène
- PET :: Polyester
- PA :: Polyamide
- PVA :: Polyvinyl alcool
- PS :: Polystyrène

## Revendications

1. Procédé d'extraction de sachets (8) souples fermés, contenant au moins une substance pour la préparation d'une boisson, ledit sachet de forme tétraédrique disposant d'une soudure longitudinale (22) et de deux soudures transversales (20,21) dans lequel on met en place le sachet dans un porte-sachet (4) comportant une poignée de préhension (5) et un logement (13) pour ledit sachet, on serre ce sachet au niveau de sa zone de soudure vers le bas du logement du dit porte-sachet (4), on met en place l'ensemble sachet porte-sachet dans une machine d'extraction (1), on perfore ledit sachet à sa partie inférieure au-dessus de la zone de soudure transversale avec une aiguille (11), on injecte dans la partie supérieure du sachet à l'aide de ladite aiguille un mélange d'air et d'eau à une pression comprise entre 0,5 et 10 bar, on déchire sous l'effet de la pression au moins l'une des faces inférieures du sachet contre des zones (9) en relief et en creux d'un dispositif d'extraction, puis on recueille l'extrait qui traverse tout le lit de la substance par les ouvertures réalisées à la partie inférieure du sachet.

2. Procédé selon la revendication 1 caractérisé en ce que les déchirures obtenues sur les faces inférieures lors de la montée en pression pendant l'extraction ont été initiées préalablement lors de la mise en place du sachet (8) dans le porte-sachet (4).

3. Procédé selon l'une des revendications 1 ou 2, caractérisé en ce qu'on met en place l'ensemble sachet porte-sachet dans la machine d'extraction (1) et on perfore ledit sachet à sa partie inférieure de manière simultanée ou consécutive.

4. Dispositif susceptible d'être utilisé pour la mise en oeuvre du procédé selon l'une des revendications 1 à 3, constitué d'un porte-sachet (4) destiné à être fixé sur une machine d'extraction (1), ledit porte-sachet comprend une poignée (5), un logement ouvert pour le sachet de forme tétraédrique et une zone d'écoulement pour le café, ledit logement (13) comprenant au-dessus de la zone d'écoulement des moyens (7) pour maintenir le sachet par sa partie inférieure et des éléments en relief et un creux (9) sur une grille d'écoulement (10) pour favoriser la déchirure d'au moins une des deux faces dudit sachet et la machine d'extraction comprend une aiguille d'injection (11) du fluide d'extraction prévue pour pénétrer dans le sachet au niveau de la grille d'écoulement du porte-sachet et une partie complémentaire (12) permettant lors de la mise en place du porte-sachet de fermer le logement du sachet.

5. Dispositif selon la revendication 4, caractérisé en ce que les moyens (7) pour maintenir le sachet dans le porte-sachet sont constitués par une pince éventuellement manipulable par une gâchette (6) disposée dans la poignée du porte-sachet.

6. Dispositif selon l'une des revendications 4 ou 5, caractérisé en ce que le porte-sachet (4) et la machine d'extraction (1) réalisent un ensemble étanche.

## Claims

1. Process for extracting sealed flexible bags (8), containing at least one substance for the preparation of a beverage, the said bag in the shape of a tetrahedron possessing one longitudinal weld (22) and two transverse welds (20, 21), wherein the bag is placed in a bag-holder (4) comprising a handle for gripping (5) and a housing (13) for the said bag, this bag is clamped in its welded region towards the bottom of the housing of the said bag-holder (4), the bag/bag-holder assembly is placed in an extraction machine (1), the said bag is perforated at its lower part above the transverse weld area with a needle (11), a mixture of air and water at a pressure of between 0.5 and 10 bar is injected by means of the said needle into the upper part of the bag, at least one of the lower faces of the bag is torn against raised and indented areas (9) of an extraction device under the effect of pressure, and the extract which passes completely through the bed of the substance is then collected via openings made in the lower part of the bag.

2. Process according to claim 1, characterized in that the tears obtained on the lower faces as the pressure rises during extraction have been previously initiated when placing the bag (8) in the bag-holder (4).

3. Process according to one of claims 1 or 2, characterized in that the bag/bag-holder assembly is put in place in the extraction machine (1) and the said bag is perforated at its lower part in a simultaneous or consecutive manner.

4. Device capable of being used for implementing the process according to one of claims 1 to 3, consisting of a bag-holder (4) designed to be fixed to an extraction machine (1), the said bag-holder comprising a handle (5), an open housing for the tetrahedral-shaped bag and an outflow region for the coffee, the said housing (13) comprising, above the outflow zone, means (7) for holding the bag by its lower part and raised and indented elements (9) on an outflow mesh (10) for promoting tearing of at least one of the two faces of the said bag, and the extraction machine comprising a needle (11) for injecting the extraction fluid, this needle being designed to penetrate the bag in the region of the outflow mesh of the bag-holder, and a complementary part (12) enabling the housing for the bag to be sealed when the bag-holder is put in place.

5. Device according to claim 4, characterized in that the means (7) for holding the bag in the bag-holder consists of a clamp which may possibly be operated by a trigger (6) arranged in the handle of the bag-holder.

6. Device according to one of claims 4 or 5, characterized in that the bag-holder (4) and the extraction machine (1) form a water-tight assembly.

## Patentansprüche

1. Verfahren zum Extrahieren eines geschlossenen flexiblen tetraederförmigen Beutels (8), der mindestens eine Substanz für die Zubereitung eines Getränks enthält und eine Längsverschweißung (22) und zwei Querverschweißungen (20, 21) aufweist, in welchem der Beutel in einen Beutelhalter (4) mit einem Griff (5) und einer Aussparung (13) zur Aufnahme dieses Beutels eingesetzt wird, dieser Beutel auf Höhe seines Verschweißungsbereichs im unteren Teil der Aussparung des Beutelhalters (4) eingeklemmt wird, die aus Beutel und Beutelhalter bestehende Einheit in eine Extraktionsmaschine (1) eingesetzt wird, der Beutel in seinem unteren Teil oberhalb des Querverschweißungsbereichs mit einer Nadel (11) perforiert wird, in den oberen Teil des Beutels mit Hilfe dieser Nadel eine Mischung aus Luft und Wasser mit einem Druck zwischen 0,5 und 10 bar eingespritzt wird, unter der Wirkung des Drucks mindestens eine der unteren Seiten des Beutels an hervorstehenden und vertieften Bereichen (9) einer Extraktionsvorrichtung aufgerissen wird und dann der Extrakt, der das gesamte Bett der Substanz durchquert, über die im unteren Teil des Beutels geschaffenen Öffnungen gesammelt wird.

2. Verfahren nach Anspruch 1, dadurch gekennzeichnet, daß die beim Druckanstieg während der Extraktion auf den unteren Seiten erhaltenen Einrisse zuvor beim Einsetzen des Beutels (8) in den Beutelhalter (4) angerissen wurden.

3. Verfahren nach einem der Ansprüche 1 oder 2, dadurch gekennzeichnet, daß die aus Beutel und Beutelhalter bestehende Einheit in die Maschine (1) eingesetzt wird und der Beutel gleichzeitig oder darauffolgend in seinem unteren Bereich perforiert wird.

4. Vorrichtung für die Durchführung des Verfahrens nach einem der Ansprüche 1 bis 3, bestehend aus einem Beutelhalter (4), der dazu bestimmt ist, an einer Extraktionsmaschine (1) befestigt zu werden, und einen Griff (5), eine offene Aussparung zur Aufnahme des tetraederförmigen Beutels und einen Abflußbereich für den Kaffee aufweist, wobei die Aussparung (13) oberhalb des Abflußbereichs eine Einrichtung (7), um den Beutel an seinem unteren Bereich zu halten, und auf einem Abflußrost (10) hervorstehende und vertiefte Elemente (9) aufweist, um das Einreißen mindestens einer der beiden Seiten des Beutels zu begünstigen, und die Extraktionsmaschine eine Nadel (11) zum Einspritzen des Extraktionsfluids aufweist, die dafür vorgesehen ist, auf Höhe des Abflußrosts des Beutelhalters in den Beutel einzudringen, sowie einen ergänzenden Teil (12) der beim Einsetzen des Beutelhalters die Verschließung der den Beutel aufnehmenden Aussparung gestattet.

5. Vorrichtung nach Anspruch 4, dadurch gekennzeichnet, daß die Einrichtung (7) zum Halten des Beutels in dem Beutelhalter aus einer Zange besteht, die ggf. durch einen im Griff des Beutelhalters angeordneten Drücker (6) manipulierbar ist.

6. Vorrichtung nach einem der Ansprüche 4 oder 5, dadurch gekennzeichnet, daß der Beutelhalter (4) und die Extraktionsmaschine (1) eine dichte Einheit bilden.
